(19) **Europäisches Patentamt**

**European Patent Office**

**Office européen des brevets**

(11) **EP 1 724 560 A1**

(12) **EUROPEAN PATENT APPLICATION**

(43) Date of publication:
**22.11.2006 Bulletin 2006/47**

(51) Int Cl.:
**G01J 5/16** (2006.01)

(21) Application number: **06075977.6**

(22) Date of filing: **01.05.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **17.05.2005 US 130978**

(71) Applicant: **Delphi Technologies, Inc.
Troy, Michigan 48007 (US)**

(72) Inventors:
• **Manlove, Gregory J.
Kokomo
IN 46902 (US)**

• **Castillo-Borelly, Pedro E.
Kokomo
IN 46901 (US)**
• **Logsdon, James H.
Kokomo
IN 46902 (US)**

(74) Representative: **Denton, Michael John et al
Delphi European Headquarters,
64 avenue de la Plaine de France,
Paris Nord II,
B.P. 65059, Tremblay en France
95972 Roissy Charles de Gaulle Cedex (FR)**

(54) **Infrared temperature sensing device**

(57)     An infrared temperature sensing device (10) is provided for sensing temperature of a target object. The sensing device (10) includes a semiconductor substrate (16), a thermopile infrared sensor (12) mounted to the substrate (16) for sensing temperature of a remote target object, and temperature sensing circuitry (20) mounted to the substrate (16). The temperature sensing circuitry (20) generates a temperature dependent signal (PTATOUT) substantially linearly related to ambient temperature of the substrate (16). The sensing device (10) further includes summing circuitry (22) for generating a signal ($V_{OUT}$) indicative of infrared sensed temperature as a function of the ambient temperature.

Fig.2.

EP 1 724 560 A1

## Description

### TECHNICAL FIELD

The present invention generally relates to temperature sensing devices and, more particularly, relates to a non-contact infrared sensor for sensing temperature of a target object relative to ambient temperature conditions.

### BACKGROUND OF THE INVENTION

Infrared sensors have been employed in various applications to accurately sense the temperature of a target object, without being in direct physical contact with that object. This is referred to as non-contact temperature sensing. There exists a wide variety of applications including medical, automotive, and industrial control applications that require accurate non-contact temperature sensing.

Non-contact temperature sensing can be achieved by a couple of approaches. One approach measures an infrared spectrum and calculates the temperature of a target object from the spectral information. Another approach measures total radiant power emitted from the target object. The temperature of the target object is then typically inferred from the total radiant power. In either case, both approaches employ the use of infrared detectors.

One type of temperature-based infrared detector is the thermopile, which is well-known in the art. The thermopile generally employs a serially connected array of thermocouples configured to provide two distinct sets of junctions. One of the thermocouple junctions, collectively called the detector junction, is exposed (optically) to the target object and is thermally isolated from its surroundings. The other set of junctions, called the reference junction, is shielded from the target object and is typically placed on a heat sink.

Initially, the detector and reference junctions are at the same temperature. When exposed to a target object, the detector junction exchanges infrared radiation with the target object. As a result, there is a net radiated heat transferred (positive or negative) at the detector junction. The temperature of the detector junction changes (positive or negative) relative to the reference junction, generating a proportional voltage at the terminals of a thermocouple array. If the target object is a grey body, and the absorption spectrum of the detector junction is likewise grey, then the voltage generated is proportional to the temperature difference between the target junction and the reference junction.

The desired output of a non-contact temperature sensor is typically the absolute temperature of the target object. However, the voltage generated by the thermopile is generally proportional to the temperature difference between the target object and the reference junction. Therefore, an accurate determination of the reference junction temperature is essential to the overall accuracy of the output temperature measurement of the sensor.

One example of a conventional thermopile infrared sensing device 110 is illustrated in FIG. l. The conventional sensing device 110 includes a thermopile infrared (IR) sensor 112 assembled onto a circuit board 116. Also mounted onto the circuit board 116 is a thermistor 120 to measure temperature of the thermopile reference junction. The thermistor 120 typically is a resistor that varies in resistance with temperature. The thermistor 120 typically is placed in a resistor divider network and produces a voltage out $V_T$ that is related to ambient temperature ($V_T$).

The thermopile IR sensor 112 is passive and produces a differential voltage (V) proportional to the difference between the temperature of the target object being measured and the temperature of the thermopile reference junction. Voltage V is applied to a low offset amplifier circuit 114 to produce a buffered and amplified signal $V_B$. Voltages $V_B$ and $V_T$ are applied to a microcontroller 118 configured with an on-chip analog-to-digital data converter 112 and software algorithm 124. The voltage signals are then converted to digital words and processed by the microcontroller 118 to generate a compensated output voltage $V_{OUT}$. The output voltage $V_{OUT}$ can be a digital representation of the calibrated sensor or can be converted to an analog voltage with a digital-to-analog converter (D/A) (not shown).

The above discussed conventional infrared sensing device exhibits a number of drawbacks. First, the ambient temperature measured by the thermistor is generally used to approximate the thermopile reference junction temperature. Thermal resistance in the package will tend to cause the reference junction to be at a higher/lower temperature than the thermistor. Low thermal resistance packages are generally expensive and have some finite thermal resistance. The location of the thermistor is also critical because ambient temperature of the entire package may not be uniform and localized heating or cooling on the circuit board may impact the overall module accuracy. Second, the thermistor generally exhibits a non-linear variation in resistance with temperature. Therefore, the thermistor generated voltage $V_T$ is typically non-linear and the resultant output voltage $V_{OUT}$ has a non-linear response as well. This non-linearity will directly impact the resultant output and requires added complex compensation circuitry and/or logic to provide an accurate sensing device.

### SUMMARY OF THE INVENTION

In accordance with the teachings of the present invention, an infrared temperature sensing device is provided for sensing temperature of a target object. The sensing device includes a semiconductor substrate, a thermopile infrared sensor mounted to the substrate for sensing temperature of a remote target object and generating an object temperature signal related to the sensed temperature of the target object. The sensing device also includes temperature sensing circuitry mounted to the substrate. The temperature sensing circuitry generates an ambient temperature signal substantially linearly related to ambient temperature of the substrate. The sensing device further includes summing circuitry for comparing the object temperature signal to the ambient temperature signal and generating an output signal indicative of an infrared sensed temperature as a function of the ambient temperature.

These and other features, advantages and objects of the present invention will be further understood and appreciated by those skilled in the art by reference to the following specification, claims and appended drawings.

BRIEF DESCRIPTION OF THE DRAWINGS

The present invention will now be described, by way of example, with reference to the accompanying drawings, in which:

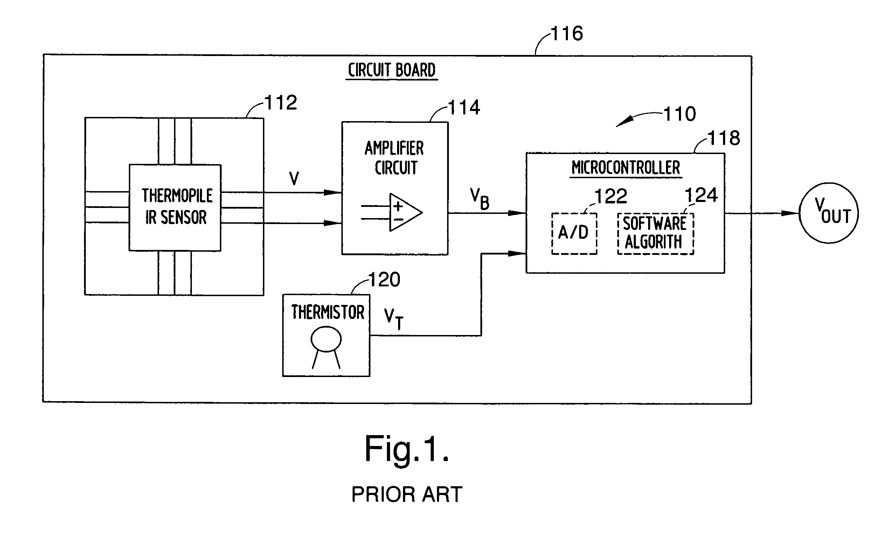

FIG. 1 is a block diagram illustrating one example of a conventional prior art infrared sensing device;
FIG. 2 is a block diagram illustrating an infrared sensing device according to the present invention;
FIGS. 3A and 3B is a circuit diagram illustrating a temperature sensing circuit employed in the sensing device of the present invention; and

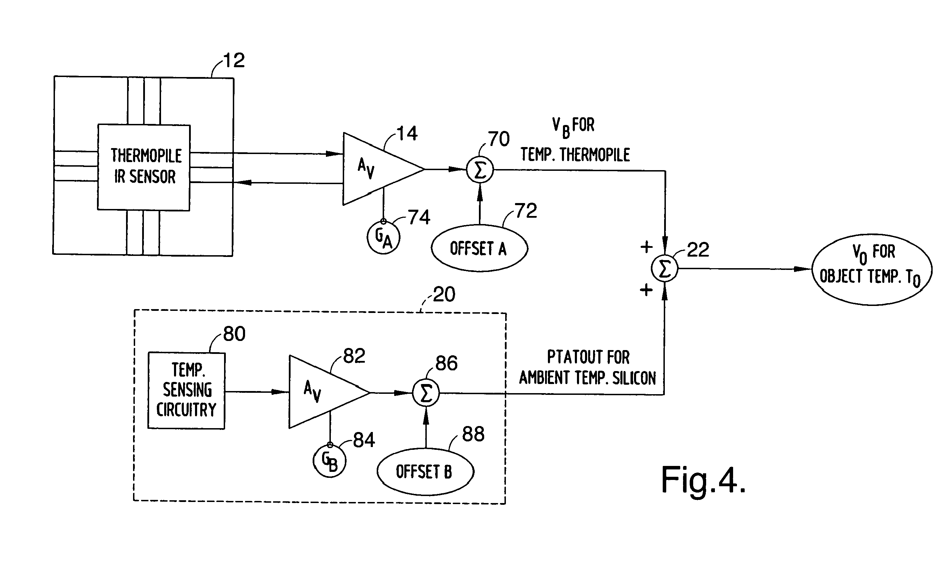

FIG. 4 is a block/circuit diagram further illustrating the infrared sensing device of the present invention.

DESCRIPTION OF THE PREFERRED EMBODIMENT

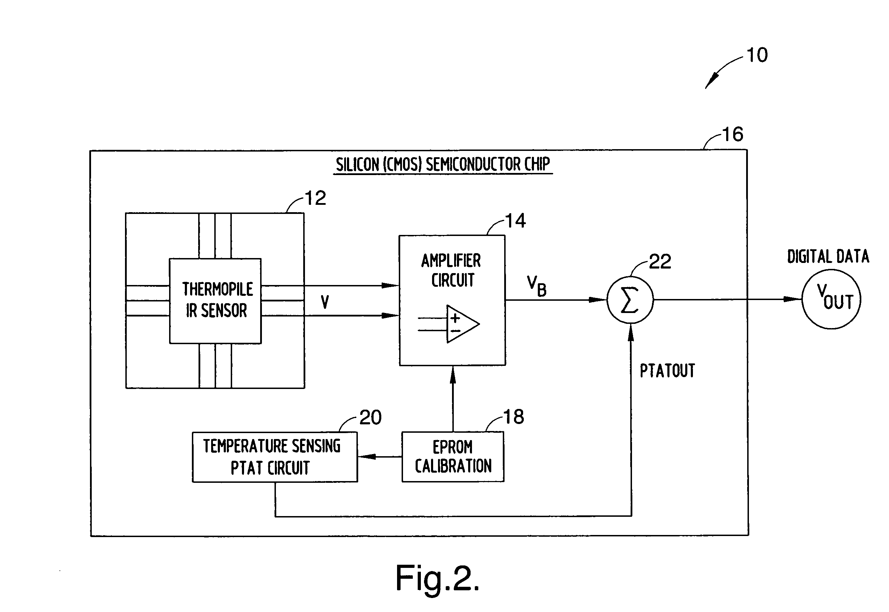

Referring now to FIG. 2, an infrared sensing device 10 is illustrated fabricated on a silicon (CMOS) substrate of a semiconductor chip 16 according to the present invention. The infrared sensing device 10 is advantageously fabricated on the semiconductor chip substrate to provide an accurate non-contact temperature sensor that functions over a wide ambient temperature range. The sensing device 10 employs a thermopile infrared (IR) sensor 12, which may include a conventional thermopile infrared sensor known in the art for generating a differential voltage V representative of sensed thermal energy. Thermopile infrared sensor 12 is passive and produces differential voltage V proportional to the difference between the temperature of the target object being sensed and the temperature of the thermopile reference junction.

The differential voltage output V generated by the thermopile IR sensor 12 is applied to an amplifier circuit 14. The amplifier circuit 14 also receives calibration signals from erasable programmable read only memory (EPROM) stored calibrations 18. The EPROM stored calibrations 18 may adjust the gain (slope) and offset of the voltage V. The amplifier circuit 14 generates a buffered, amplified and gain and offset compensated single-ended voltage signal $V_B$.

The infrared sensing device 10 also includes a temperature sensing proportional-to-absolute temperature (PTAT) circuit 20 that is fabricated on the same silicon structure of the semiconductor chip 16. The PTAT circuit 20 could be integrated with the thermopile IR sensor 12 or provided as a separate circuit. The PTAT circuit 20 and thermopile IR sensor 12 are fabricated on the same single silicon substrate. In order to maintain accuracy of the sensing device, the PTAT circuit 20 should be located close to the reference junction of the thermopile IR sensor 12.

The temperature sensing PTAT circuit 12 also receives calibration signals from EPROM calibrations 18 which allow for compensation of gain (slope) and offset values of the sensed ambient temperature. The PTAT circuit 20 generates an output voltage PTATOUT which is summed with the amplifier circuit output voltage $V_B$ via a summing circuit 22. The output of the summing circuit 22 provides a digital data voltage output $V_{OUT}$ which is indicative of the sensed temperature ($T_O$) of the target object.

The temperature sensing PTAT circuit 20 provides accurate measurements of the thermopile reference junction temperature by measuring the temperature of the silicon substrate, and produces a linear voltage proportional to the sensed ambient temperature. The output voltage PTATOUT generated by the PTAT circuit 20 is used to control both the gain and offset of the voltage $V_B$ generated by the thermopile IR sensor 12. The output voltage $V_{OUT}$ of the sensing device 10 is designed to vary in a linear manner as a function of temperature.

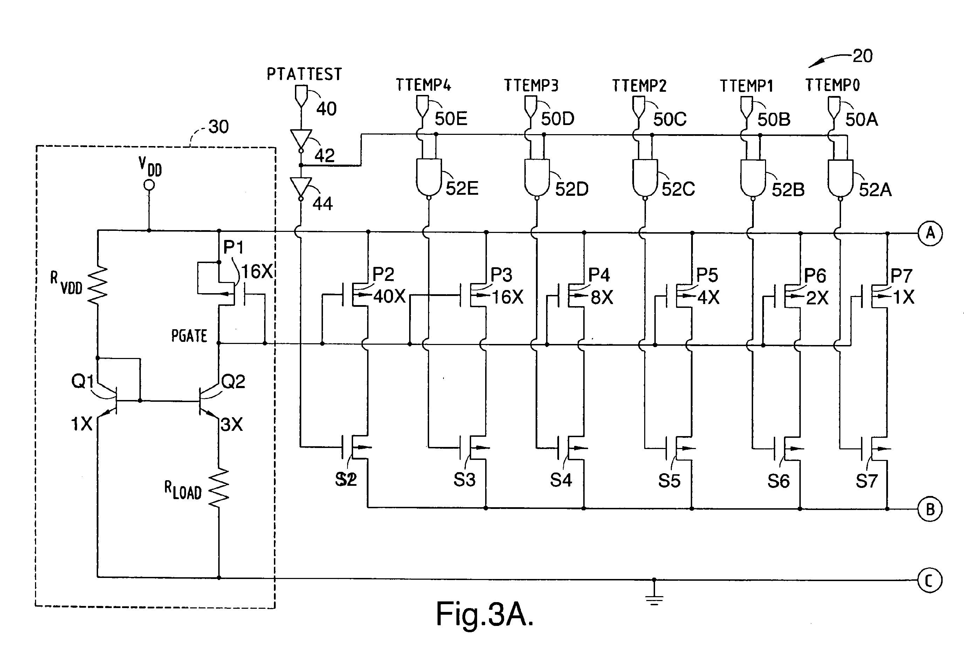

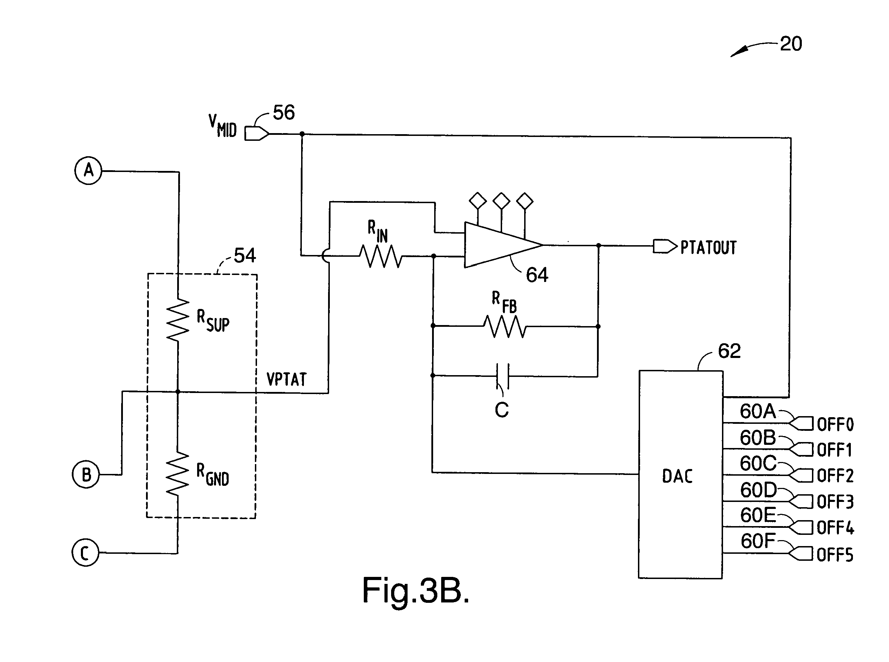

The temperature sensing PTAT circuit 20 is illustrated in further detail in FIGS. 3A and 3B. The PTAT circuit 20 includes a pair of bipolar NPN transistors Q 1 and Q2 coupled together via the gates. Transistors Q 1 and Q2 receive a rail voltage $V_{DD}$ via resistors $R_{VDD}$ and $R_{LOAD}$ and current mirror P1. The circuitry in block 30, including the transistors Q1 and Q2, is located near the thermopile IR sensor 12 so as to be subjected to substantially the same ambient temperature. In one embodiment, a thermally conductive material, such as a metal ring, may extend around or in close proximity to the PTAT circuitry in block 30 and the thermopile IR sensor 12.

The voltage at the emitter of transistor Q2 may be set equal to $V_{BEI}$ minus $V_{BE2}$ which is the difference in the voltage drop between the base and emitters of transistors Q1 and Q2. The voltage across resistor $R_{LOAD}$ may be defined by the following equation:

$$V_{RL} = KT/q * /n\,(A2/A1),$$

where K is Boltzmann's constant, T is temperature in Kelvin, q is the electronic charge and In is the natural log. A2 is the emitter area of transistor Q2 and A1 is the emitter area of transistor Q1. In the embodiment shown, the ratio A2/A1 is equal to three.

The collector current of transistor Q2 which is the output current of the temperature sensing PTAT circuit 20 may be identified by the following equation:

$$I_{PTAT} = V_{RL}/R_{LOAD} = KT/q * 1.0986/R_{LOAD}.$$

Transistor P1 is a P-channel transistor having its gate tied to drain to act as a current mirror. The current passing through transistor P1 equals the current passing through transistor Q2 and is proportional to absolute temperature and inversely proportional to the resistance of integrated resistor $R_{LOAD}$.

Transistors P2-P7 are each configured as current mirrors that take up a percentage of the PTAT circuit current and apply it to the resistor divider network 54 made up of resistors $R_{SUP}$ and $R_{GND}$. Transistors P2-P7 are coupled to respective switches S2-S7. Switch S2 receives a voltage PTATTEST at input 40 via inverters 42 and 44. Switches S3-S7 receive signals TTEMP4-TTEMP0 via inputs 50E-50A and NAND logic gates 52E-52A, respectively. The output of inverter 42 is also supplied at each of NAND logic gates 52E-52A. The gates of transistors P1-P7 are commonly tied together and provide a common gate signal PGATE.

A resistor divider network P54 is shown made up of resistors $R_{SUP}$ and $R_{GND}$ which is coupled to the current mirrors P2-P7. The resultant output voltage from the resistor divider network 54 is $V_{PTAT}$ which is directly proportional to the sensed ambient temperature of the integrated circuitry. The voltage $V_{PTAT}$ may be represented by the following equations:

$$V_{PTAT} = [I_{PTAT} * R_{GND} * R_{SUP}/(R_{GND} + R_{SUP})] + V_{DD} * R_{GND}/(R_{GND} + R_{SUP});$$
$$V_{PTAT} = A * (KT/Q) + V_{DD} * R_{GND}/(R_{GND} + R_{SUP}); \text{ and}$$
$$V_{PTAT} = B * T + V_{TH}$$

where A is a constant, T is temperature in degrees Kelvin, voltage $V_{DD}$ is the supply voltage which is nominally fixed to five volts, and $R_{GND}$ and $R_{SUP}$ are resistances (ohms) of the resistors in the resistor divider network 54. In the simplified equation of $V_{PTAT}$, B is a constant, T is temperature in degrees Kelvin, and $V_{TH}$ is the voltage divider of resistors $R_{GND}$ and $R_{SUP}$.

When the sensing device temperature is at absolute zero degrees (0°) Kelvin, voltage $V_{PTAT}$ is equal to voltage $V_{TH}$. At any other temperature other than absolute zero degrees (0°) Kelvin, the voltage is greater than $V_{TH}$ and is directly proportional to the ambient temperature of the semiconductor substrate. The resulting output voltage of the temperature sensing PTAT circuit 20 is PTATOUT which is a buffered amplified version of voltage $V_{PTAT}$. The voltage PTATOUT generated by the PTAT circuit 20 may be represented by the following equation:

$$PTATOUT = [1 + R_{FB}/R_{IN}] * (V_{PTAT} - V_{MID}) + V_{DACOFF} * R_{DAC}/R_{FB}.$$

For the application shown, resistor $R_{FB}$ divided by resistor $R_{IN}$ is equal to nine, according to one example. According to this example, the output signal may have a gain factor of about ten. The voltage $V_{DACOFF}$ is a voltage output of digital-to-analog converter (DAC) 62 producing a voltage proportional to the digital input word OFF0-OFF5. The digital calibration may be stored in on-chip non-volatile member, such as EPROM or EEPROM memory devices. The digital-to-analog converter (DAC) 62 may be implemented as an R2R ladder with a variable voltage and constant output impedance, and can be configured to produce any impedance and any step size. According to one example the DAC 62 produces an output step of approximately 4 millivolts per bit. A total of six bits OFF0-OFF5 are included for a total combination of sixty-four (64) steps varying from plus (+) 128 millivolts to minus (-) 128 millivolts. The DAC circuit 62 may be optimized to easily calibrate the PTAT output accurately in the primary temperature region of operation.

For calibration of a linear function, measurements of offset and gain are made. The PTAT circuit 20 has a test input 40 for receiving a test input signal PTATTEST. Signal PTATTEST, when asserted, turns all the current to the PTAT circuit 20 off. This is the equivalent of a temperature of -273°C (Celsius) or 0° Kelvin. The PTAT voltage is then measured with the PTATTEST signal asserted. The PTATTEST signal is then de-asserted (disabled), and the signal PTATOUT is measured and calibrated by asserting or de-asserting digital binary inputs TTEMP0-TTEMP4 by way of respective inputs 50A-50E. This applies a signal that passes through corresponding logic NAND gates 52A-52E which, in turn, applies signals to respective switches S7-S3.

A digital word made up of binary inputs TTEMP0-TTEMP4 that produces a desired gain output is stored in non-volatile memory similar to the offset bits. The PTAT circuit 20 can be calibrated at a single temperature, because the first temperature of zero degrees (0°) Kelvin is produced using the test mode as discussed above. This allows for an accurate establishment of the slope (gain) of the PTAT circuit 20 with only one temperature point measurement.

The calibration technique minimizes the manufacturing cost of the sensing device 10 because changing die temperature experienced with conventional devices generally requires a long period of time. The final calibration can be made at near room temperature, thus, the slope will be based on a temperature difference of approximately 300°C. Small inaccuracies in the slope of the calibration may produce minimal errors in the desired operating range of approximately 100°C.

A final calibration of the PTAT circuit 20 includes the offset calibration. This may be accomplished by adjusting binary offset value OFF0-OFF5. For the application of the sensed circuit subjected to a gain temperature, the final calibration of the PTAT output may be made at the packaging site. Slope calibration can be implemented at the wafer manufacture location. An accurate PTAT voltage is achieved because the operation of the sensing device is required in a much narrower temperature range than 0-300° Kelvin. Thus, the slope can be calibrated, and the offset can be adjusted to accurately minimize any PTAT circuit 20 errors at the final assembly. The voltage PTATOUT, at the temperature the offset is calibrated, should have less error than the offset resolution of four millivolts. In one embodiment, the output change may be approximately ten millivolts per degree Celsius, indicating the output is accurate to within $\pm 0.5°C$ at the temperature of calibration. The slope error has been minimized, producing an accurate output over the desired temperature region of operation.

The offset may be calibrated after packaging, thereby allowing any error related effects from the final processing and packaging of the sensing device to be calibrated out. The output voltage target may be based on the measurement of the ambient temperature. It is generally easier to measure the temperature to within a level of accuracy than to force the temperature to the same level.

It is desirable that the PTATOUT voltage be an accurate representation of the thermopile reference junction temperature. To assure that the PTAT circuit 20 and the reference junction of the thermopile IR sensor 12 are as close as possible to the same temperature, a thermally conductive material, such as a metal ring, may surround the infrared sensor 12 and the PTAT circuit 20. Metal is a good thermal conductor and will minimize any variations in temperature across the semiconductor die substrate. Additionally, the PTAT circuit 20 may be placed as close as possible to the thermopile IR sensor 12. Further, if enhanced accuracy is required, multiple PTAT circuits 20 may be employed in various locations around the die substrate and can be used to produce an accurate average of the ambient temperature. Analog filtering of the PTAT signal could further be added to provide additional averaging over time.

The integration of the thermopile IR sensor 12 and temperature sensing signal conditioning circuitry 20 produces an accurate measure of the temperature difference between a target object and the reference junction of the thermopile IR sensor 12. Combining the IR sensor 12 signal with an accurate on-chip voltage proportional to absolute temperature (PTAT) of the thermopile reference junction on the same silicon structure improves the non-contact temperature measurement. The circuitry and calibration techniques for accurately producing the PTAT voltage with a minimal amount of calibration time and costs are advantageous.

It will be understood by those who practice the invention and those skilled in the art, that various modifications and improvements may be made to the invention without departing from the spirit of the disclosed concept. The scope of protection afforded is to be determined by the claims and by the breadth of interpretation allowed by law.

**Claims**

**1.** An infrared temperature sensing device (10) comprising:

a semiconductor substrate (16);
a thermopile infrared sensor (12) mounted to the substrate (16) for sensing temperature of a remote target object and generating an object temperature signal (V) related to the sensed temperature of the target object; temperature sensing circuitry (20) mounted to the substrate (16) for generating an ambient temperature signal (PTATOUT) substantially linearly related to ambient temperature of the substrate (16); and summing circuitry (22) for comparing the object temperature signal (V) to the ambient temperature signal (PTATOUT) and generating an output signal ($V_{OUT}$) indicative of an infrared sensed temperature of the target object as a function of the ambient temperature.

2. The sensing device as defined in claim 1, wherein the temperature sensing circuitry (20) comprises first and second bipolar transistors (Q1 and Q2), a resistor ($R_{LOAD}$), and a current mirror (P 1).

3. The sensing device as defined in claim 2, wherein the temperature sensing circuitry (20) further comprises a resistor divider network (54).

4. The temperature sensing device as defined in claim 3, wherein the temperature sensing circuitry comprises a plurality of selectable current mirrors (P2-P7).

5. The sensing device as defined in claim 1, wherein the temperature sensing circuitry (20) comprises offset and gain compensation circuitry.

6. The sensing device as defined in claim 1, wherein the temperature sensing circuitry (20) comprises gain compensation circuitry defining a linear relationship of the ambient temperature and the sensed temperature of the remote target object.

7. The sensing device as defined in claim 6, wherein the linear relationship is established by applying a known input (PTATTEST) to the compensation circuitry during a test mode in comparison to a measurement at a known temperature.

8. The sensing device as defined in claim 7, wherein the temperature sensing circuitry (20) further comprises offset circuitry.

9. The sensing device as defined in claim 1, wherein the output signal comprises a voltage output signal ($V_{OUT}$).

10. The sensing device as defined in claim 1, wherein the semiconductor substrate (16) comprises a single silicon structure.

11. The sensing device as defined in claim 1, wherein the temperature sensing circuitry comprises proportional-to-absolute temperature circuitry (20).

Fig.1.

PRIOR ART

EP 1 724 560 A1

Fig.2.

EP 1 724 560 A1

Fig.3A.

Fig.3B.

Fig.4.

THERMOPILE IR SENSOR — 12

14 $A_V$

74 $G_A$

70 $\Sigma$

72 OFFSET A

$V_B$ FOR TEMP. THERMOPILE

22 $\Sigma$ + +

$V_0$ FOR OBJECT TEMP. $T_0$

20

80 TEMP. SENSING CIRCUITRY

82 $A_V$

84 $G_B$

86 $\Sigma$

88 OFFSET B

PTATOUT FOR AMBIENT TEMP. SILICON

EP 1 724 560 A1

**EUROPEAN SEARCH REPORT**

Application Number

EP 06 07 5977

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 333 504 A (DELPHI TECHNOLOGIES, INC) 6 August 2003 (2003-08-06) * figures 1,4 * * paragraph [0020] * ----- | 1-11 | INV. G01J5/16 |
| A | DE 103 21 649 A1 (HEIMANN SENSOR GMBH) 2 December 2004 (2004-12-02) * figure 1 * * paragraph [0044] - paragraph [0045] * ----- | 1-11 | |
| A | KHADOURI S H ET AL: "A smart CMOS interface system for thermocouples" INSTRUMENTATION AND MEASUREMENT TECHNOLOGY CONFERENCE, 1996. IMTC-96. CONFERENCE PROCEEEDINGS. QUALITY MEASUREMENTS: THE INDISPENSABLE BRIDGE BETWEEN THEORY AND REALITY., IEEE BRUSSELS, BELGIUM 4-6 JUNE 1996, NEW YORK, NY, USA,IEEE, US, vol. 1, 4 June 1996 (1996-06-04), pages 691-695, XP010163967 ISBN: 0-7803-3312-8 * the whole document * ----- | 1-11 | |

TECHNICAL FIELDS SEARCHED (IPC)

G01J

The present search report has been drawn up for all claims

| Place of search | Date of completion of the search | Examiner |
|---|---|---|
| The Hague | 7 July 2006 | Rasmusson, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 06 07 5977

This annex lists the patent family members relating to the patent documents cited in the above-mentioned European search report.
The members are as contained in the European Patent Office EDP file on
The European Patent Office is in no way liable for these particulars which are merely given for the purpose of information.

07-07-2006

| Patent document cited in search report | | Publication date | Patent family member(s) | Publication date |
|---|---|---|---|---|
| EP 1333504 | A | 06-08-2003 | NONE | |
| DE 10321649 | A1 | 02-12-2004 | NONE | |

For more details about this annex : see Official Journal of the European Patent Office, No. 12/82